# EUROPÄISCHE PATENTSCHRIFT

(11) **EP 1 775 448 B1**
(45) Veröffentlichungstag und Bekanntmachung des Hinweises auf die Patenterteilung: **27.02.2008**
(21) Anmeldenummer: 06121640.4
(22) Anmeldetag: 02.10.2006
(51) Int. Cl.: F02D 41/00, F02D 13/02

(54) **Verfahren zur Steuerung einer Brennkraftmaschine mit Ventilhubumschaltung**
Control method for engine with valve-lift switching system
Procédé de commande pour moteur à combustion interne avec système de commutation de la levée de soupape

(30) Priorität: 11.10.2005 DE 102005048703
(43) Veröffentlichungstag der Anmeldung: 18.04.2007
(73) Patentinhaber: Siemens VDO Automotive AG, 93055 Regensburg (DE)
(72) Erfinder: Bauer, Erwin, 93138 Lappersdorf (DE); Ellmer, Dietmar, 93059 Regensburg (DE); Klingseis, Bernhard, 94550 Künzing (DE)

(56) Entgegenhaltungen:
- EP-A2- 1 152 128
- WO-A-99/09303
- GB-A- 2 333 377
- JP-A- 2005 171 862

## Beschreibung

Die vorliegende Erfindung betrifft ein Verfahren zur Steuerung einer Brennkraftmaschine mit Ventilhubumschaltung, insbesondere mit diskreter Ventilhubumschaltung.

Das Prinzip der Ventilhubumschaltung bei Brennkraftmaschinen ist im Stand der Technik bekannt. So sind Systeme, wie z.B. das Vario Cam Plus der Fa. Porsche, seit einigen Jahren bereits in Serienfertigung (siehe auch "Handbuch Verbrennungsmotor", Herausgeber: van Basshuysen/Schäfer, Vierweg Verlag, 1. Auflage, April 2002). Problematisch bei dieser Technik ist nach wie vor der Ventilhubumschaltprozess als solcher. Insbesondere das Schalten von kleinem zu großem Ventilhub bereitet Schwierigkeiten in Bezug auf die Momentenneutralität der Brennkraftmaschine. Fehlende Momentenneutralität der Brennkraftmaschine äußert sich in einem spürbaren Ruckeln des Kraftfahrzeugs beim Umschalten von einem zum anderen Ventilhub. Der Grund für die fehlende Momentenneutralität liegt in kaum vermeidbaren Ungenauigkeiten im Schluck- oder Liefergradmodell (Saugrohrmodell) der Brennkraftmaschine.

Diese Modelle, die in der Motorsteuerung laufen und dort mit den entsprechenden Betriebsdaten der Brennkraftmaschine versorgt werden, berechnen betriebspunktabhängig die dem Verbrennungsprozess zugeführte Luftmasse. Daraus wird unter Einhaltung eines bestimmten Luft-Kraftstoff-Verhältnisses unter Berücksichtigung des vorgegebenen Lambda-Werts die einzuspritzende Kraftstoffmenge berechnet. Diese Kraftstoffmenge bestimmt wiederum das zu erwartende Drehmoment des jeweiligen Arbeitsspiels der Brennkraftmaschine.

Für jede Ventilhubkonfiguration ist in der Motorsteuerung ein eigenes Modell hinterlegt. Die Modelldaten sind in Kennfeldern abgelegt, die von so genannten Stützstellen gebildet werden. Das Gütekriterium für die Umschaltung besteht darin, dass das tatsächliche Motordrehmoment in beiden Konfigurationen - also direkt vor und nach der Ventilhubumschaltung - möglichst gleich ist. Bereits kleine Fehler in der Modellberechnung führen jedoch zu Momentenunterschieden und damit zu Ungenauigkeiten bei der Ventilhubumschaltung.

Ein weiteres Problem an dieser Stelle besteht darin, dass sich durch die Ventilhubumschaltung in aller Regel das verbrennungstechnische Verhalten der Brennkraftmaschine ändert. Dies ist hauptsächlich bei Kanaleinspritzern aufgrund des veränderten Strömungsquerschnitts am Ventil zu erwarten. Ein weiteres Problem ergibt sich dann, wenn im Zuge der Ventilhubumschaltung auch noch ein Brennverfahrenswechsel stattfindet, beispielsweise geht eine ottomotorische Verbrennung in eine kontrollierte Selbstzündung über.

Prinzipiell können die in der Motorsteuerung ablaufenden Modelle beliebig genau ausgeführt werden. Das Problem dabei besteht jedoch darin, dass die Komplexität der Modelle rasch zunimmt, wenn alle Einflussparameter auf eine abzubildende Größe mit einer bestimmten Genauigkeit erfasst werden sollen. Selbst moderne Motorsteuerungen stoßen an dieser Stelle schnell an ihre Grenzen. In diesem Fall sind die Speicher- und Rechenkapazität der Motorsteuerung schnell erschöpft, so dass letztendlich Kompromisse und Abstriche bezüglich der Genauigkeit gemacht werden müssen.

Es ist daher die Aufgabe der vorliegenden Erfindung, ein Verfahren zur Steuerung einer Brennkraftmaschine mit Ventilhubumschaltung bereitzustellen, das sich durch eine verbesserte Momentenneutralität bei Ventilhubumschaltprozessen im Vergleich zum Stand der Technik auszeichnet.

Das obige Problem wird durch ein Verfahren gemäß dem unabhängigen Patentanspruch 1 gelöst. Bevorzugte Ausführungsformen und Weiterentwicklungen der vorliegenden Erfindung gehen aus der folgenden Beschreibung, den begleitenden Zeichnungen und den anhängenden Ansprüchen hervor.

Das erfindungsgemäße Verfahren zur Steuerung einer Brennkraftmaschine mit Ventilhubumschaltung umfasst die folgenden Schritte: Bestimmen einer Basis-Zylinderfüllung, insbesondere einer Basis-Luftmenge, mit Hilfe eines Basis-Saugrohrmodells für mindestens einen ersten und einen zweiten Ventilhub der Brennkraftmaschine ausgehend von einem erfassten Saugrohrdruck, Erkennen eines umschaltrelevanten Druckbereichs für die Ventilhubumschaltung anhand des erfassten Saugrohrdrucks und Bestimmen einer Umschalt-Zylinderfüllung entsprechend eines Betriebspunkts der Brennkraftmaschine für den umschaltrelevanten Druckbereich mit Hilfe eines Umschaltsaugrohrmodells, so dass die auf Grundlage der Umschaltzylinderfüllung angesteuerte Ventilhubumschaltung mit annähernd konstantem Drehmoment des Motors durchführbar ist.

Das vorliegende Verfahren wird vorzugsweise durch eine Motorsteuerung der Brennkraftmaschine durchgeführt. Ausgangspunkt des Verfahrens bilden die ständig durch die Motorsteuerung erfassten Betriebsdaten der Brennkraftmaschine, wie beispielsweise der Saugrohrdruck, die Drehzahl, die Drosselklappenstellung und dergleichen. Eines der Hauptelemente des vorliegenden Verfahrens besteht darin, dass außerhalb des umschaltrelevanten Druckbereichs für die Ventilhubumschaltung das Basis-Saugrohrmodell die Basis-Zylinderfüllung entsprechend dem Betriebspunkt der Brennkraftmaschine bestimmt. Das Basis-Saugrohrmodell wird gemäß einer Ausführungsform gleichzeitig jeweils für jeden möglichen Ventilhub der Brennkraftmaschine durchgeführt. Dies eröffnet die Möglichkeit, dass bei Anforderung einer Ventilhubumschaltung durch die Motorsteuerung die erforderlichen Betriebsdaten der Brennkraftmaschine für den neuen Ventilhub bereits durch das Basis-Saugrohrmodell berechnet vorliegen.

Sobald die Motorsteuerung erkennt, dass sich die Brennkraftmaschine in einem umschaltrelevanten Druckbereich zur Ventilhubumschaltung befindet, erfolgt die Berechnung der Zylinderfüllung mit Hilfe des Umschalt-Saugrohrmodells. Dies liefert im Vergleich zum Basis-Saugrohrmodell eine Berechnung der Zylinderfüllung mit höherer Genauigkeit, so dass unter Berücksichtigung einer Mehrzahl von Betriebsdaten der Brennkraftmaschine eine Ventilhubumschaltung mit annähernd konstantem Drehmoment der Brennkraftmaschine möglich ist, während gleichzeitig der Speicher- und Rechenaufwand für das gesamte Verfahren zur Steuerung der Ventilhubumschaltung begrenzt wird.

Gemäß einer Ausführungsform setzt sich das Umschalt-Saugrohrmodell für den umschaltrelevanten Druckbereich aus dem Basis-Saugrohrmodell für jeden Ventilhub und einem Füllungskorrekturmodell für jeden Ventilhub zusammen. Das Füllungskorrekturmodell für jeden Ventilhub liefert detailliertere Zylinderfüllungsdaten im Vergleich zum Basis-Saugrohrmodell, so dass es korrigierend den Werten des Basis-Saugrohrmodells überlagert wird. Um die Zylinderfüllung mit geringem Aufwand bestimmen zu können, arbeitet das Basis-Saugrohrmodell mit jeweils einem Basis-Kennfeld für jeden Ventilhub der Brennkraftmaschine. Auch das Füllungskorrekturmodell basiert bevorzugt auf in der Motorsteuerung gespeicherten Kennfeldern, die aber auch genauso wie das Basis-Saugrohrmodell durch entsprechende nicht-kennfeldgestützte Berechnungen durchgeführt werden können.

Im Umschalt-Saugrohrmodell arbeiten das Basis-Saugrohrmodell und das Füllungskorrekturmodell derart zusammen, dass in dem Füllungskorrekturmodell ein Korrekturwert, insbesondere eine Korrektur-Luftmenge, für die Basis-Zylinderfüllung für jeden Ventilhub bestimmt wird, der zur Basis-Zylinderfüllung addiert eine Korrektur-Zylinderfüllung ergibt. Während gemäß einer Ausführungsform parallel zur ermittelten Korrektur-Zylinderfüllung auch die Basis-Zylinderfüllung zur Bestimmung der Betriebsdaten weitergegeben wird, wird nun auf Grundlage der Korrektur-Zylinderfüllung auch eine Korrektur der Betriebsdaten der Brennkraftmaschine berechnet. Die in diesem Zusammenhang ermittelten spezifischen Korrekturgrößen sind beispielsweise eine Einspritzzeit-Korrektur, eine Zündwinkel-Korrektur und eine Korrektur einer Drosselklappenstellung. Auf diese Weise geht bevorzugt ein Füllungskorrekturkennfeld, das im umschaltrelevanten Druckbereich mit höherer Genauigkeit im Vergleich zum Basis-Saugrohrmodell arbeitet, in die Bestimmung der Betriebsdaten der Brennkraftmaschine ein.

Gemäß einer weiteren Ausführungsform erfolgt ein gewichtetes Bestimmen der Korrektur-Zylinderfüllung, indem mit zunehmender Entfernung von einem Umschaltdruck der Korrekturwert mit abnehmendem Anteil in die Korrektur-Zylinderfüllung eingeht.

Gemäß einer weiteren Ausführungsform der vorliegenden Erfindung wird das Umschalt-Saugrohrmodell allein durch ein Detail-Saugrohrmodell für jeden Ventilhub begrenzt auf den umschaltrelevanten Druckbereich gebildet.

In dieser Ausführungsform wird außerhalb des umschaltrelevanten Druckbereichs allein das Basis-Saugrohrmodell zur Berechnung der Zylinderfüllung genutzt. Um innerhalb des umschaltrelevanten Druckbereichs eine höhere Genauigkeit zur Bestimmung der Betriebsdaten der Brennkraftmaschine zu gewährleisten, wird der umschaltrelevante Druckbereich durch das Detail-Saugrohrmodell zur Bestimmung der Zylinderfüllungsdaten herangezogen. Da im Vergleich zum Basis-Saugrohrmodell das Detail-Saugrohrmodell auf einen schmaleren Saugrohr-Druckbereich abgebildet ist, steht hier mehr Kapazität zur Speicherung von Betriebsdaten der Brennkraftmaschine mit höherer Genauigkeit zur Verfügung.

Gemäß einer weiteren Ausführungsform berechnet das Detail-Saugrohrmodell die Umschalt-Zylinderfüllung für den jeweiligen Ventilhub spezifisch oder diese wird basierend auf einem für jeden Ventilhub spezifischen Füllungskennfeld bestimmt.

Gemäß einer weiteren Ausführungsform wird das Detail-Saugrohrmodell mit größerer Genauigkeit als das Basis-Saugrohrmodell in Bezug auf die Bestimmung der Zylinderfüllung ausgeführt, um insgesamt Rechenleistung und/oder Speicherkapazität zu sparen.

Die vorliegende Erfindung wird unter Bezugnahme auf die begleitende Zeichnung näher erläutert. Es zeigen:
- Fig. 1: ein Ablaufdiagramm der Ventilhubumschaltung von Hub 1 nach Hub 2 gemäß einer ersten Ausführungsform und
- Fig. 2: ein Ablaufdiagramm der Ventilhubschaltung von Hub 1 nach Hub 2 gemäß einer zweiten Ausführungsform.

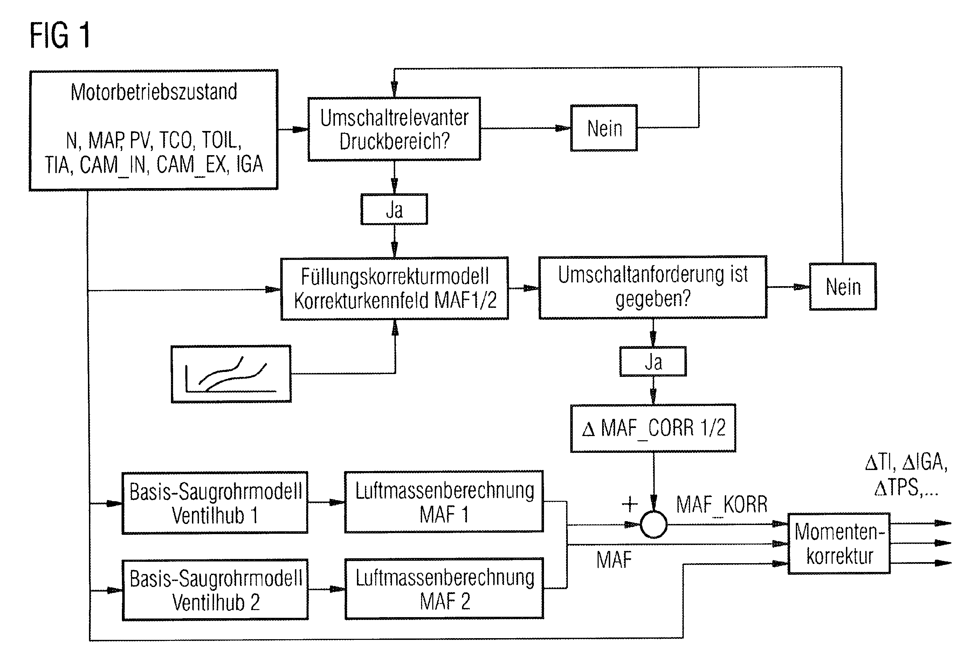

Eine Ausführungsform der vorliegenden Erfindung ist in Fig. 1 dargestellt. Hier ist ein Ablaufdiagramm des Verfahrens zur Ventilhubumschaltung gezeigt, das innerhalb der Motorsteuerung der Brennkraftmaschine ausgeführt wird. Grundlage für dieses Verfahren bilden die erfassten und an die Motorsteuerung weitergeleiteten Betriebsdaten der Brennkraftmaschine. Diese umfassen unter anderem die Drehzahl N, den Pedalwert PV, den Saugrohrdruck MAP, die Kühlmitteltemperatur TCO, die Öltemperatur TOIL, die Ansauglufttemperatur TIA, Nockenwellensignale CAM_IN, CAM_EX und den zylinderindividuellen Gesamtzündwinkel IGA.

Der erfasste Saugrohrdruck MAP bildet bevorzugt den Ausgangspunkt, um die vom Betriebszustand der Brennkraftmaschine abhängige Umschaltung des Ventilhubs anzusteuern. Der Ventilhub wird beispielgebend zwischen dem diskreten Ventilhub 1 und dem diskreten Ventilhub 2 umgeschaltet. Es ist des Weiteren denkbar, dass zwischen mehr als zwei Ventilhüben umgeschaltet werden kann, oder dass eine kontinuierliche Ventilhubverstellung erfolgt.

Der Saugrohrdruck MAP stellt ein Maß für die in Abhängigkeit vom Betriebszustand der Brennkraftmaschine zugeführte Luftmenge dar. Entsprechend der Luftmenge, die einen Bestandteil der Zylinderfüllung bildet, wird Kraftstoff zugemessen, um das entsprechend dem Betriebszustand der Brennkraftmaschine geforderte Drehmoment zu erzielen.

Der Motorbetriebszustand bzw. die oben genannten Betriebsdaten der Brennkraftmaschine werden an das Basis-Saugrohrmodell weitergeleitet. Das Basis-Saugrohrmodell bestimmt jeweils parallel für jeden ansteuerbaren Ventilhub der Brennkraftmaschine und in Abhängigkeit vom angeforderten Betriebszustand oder Drehmoment die Basis-Zylinderfüllung. Die Basis-Zylinderfüllung setzt sich bevorzugt aus einer Anforderung für die Basis-Luftmenge MAF1, MAF2 zusammen, der entsprechend dann die Kraftstoffmenge zum Betrieb der Brennkraftmaschine zugemessen wird.

In Abhängigkeit vom Absolutwert des Saugrohrdrucks MAP und dem Betriebszustand der Brennkraftmaschine wird ein umschaltrelevanter Druckbereich definiert, in dem eine Umschaltung von einem zu einem anderen Ventilhub erfolgt. Befindet sich die Brennkraftmaschine gemäß dem gemessenen Saugrohrdruck MAP au-ßerhalb des umschaltrelevanten Druckbereichs, wird die Zylinderfüllung der Brennkraftmaschine durch das Basis-Saugrohrmodell in Form der Basis-Zylinderfüllung vorgegeben. Die Basis-Zylinderfüllung, d.h. vorzugsweise die Basis-Luftmenge, kann beispielsweise für jeden Ventilhub gemäß einer Berechnungsvorschrift in der Motorsteuerung berechnet werden. Es ist ebenfalls denkbar, die Basis-Luftmenge zur Einsparung von Rechenleistung und Speicherkapazität basierend auf einem Basis-Kennfeld zu ermitteln.

Verglichen mit dem umschaltrelevanten Druckbereich ist der Basis-Druckbereich, d.h. der Bereich, in dem das Basis-Saugrohrmodell zur Berechnung der Zylinderfüllung herangezogen wird, relativ breit. Um den Rechenaufwand zu begrenzen, ist nur eine begrenzte Anzahl Betriebsdaten im Basis-Kennfeld gespeichert und somit im Basis-Saugrohrmodell verarbeitbar. Diese Einschränkung wird vorgenommen, um den Rechenaufwand und die Komplexität derartiger Kennfelder nicht ins Unwirtschaftliche zu steigern. Basierend auf diesem Basis-Kennfeld, das für jeden Ventilhub der Brennkraftmaschine vorliegt, werden im Normalbetrieb die Zylinderfüllungswerte, im Speziellen die Basis-Luftmenge MAF1, MAF2 für Ventilhub 1 und Ventilhub 2, vorgegeben, die zur weiteren Motorsteuerung genutzt werden.

Erkennt die Motorsteuerung anhand der Leistungsabfrage, des Saugrohrdrucks MAP und/oder einer Momentenabfrage, dass sich die Brennkraftmaschine im umschaltrelevanten Druckbereich befindet, aktiviert die Motorsteuerung ein Umschalt-Saugrohrmodell zur Bestimmung der Umschalt-Zylinderfüllung. In die Bestimmung der Umschalt-Zylinderfüllung gehen der Betriebszustand der Brennkraftmaschine, der momentan geschaltete Ventilhub und der zu schaltende Ventilhub ein. Mit Hilfe dieses Umschalt-Saugrohrmodells erfolgt eine genauere Bestimmung der Zylinderfüllung, d.h. der Umschalt-Zylinderfüllung während des Umschaltens von einem ersten auf einen zweiten Ventilhub, im Vergleich zur Basis-Zylinderfüllung, so dass die Ventilhubumschaltung der Brennkraftmaschine mit annähernd konstantem Drehmoment, also Momentenneutralität, durchgeführt wird.

Gemäß einer Ausführungsform setzt sich das Umschalt-Saugrohrmodell aus dem Basis-Saugrohrmodell für jeden Ventilhub und einem Füllungskorrekturmodell für jeden Ventilhub zusammen. Nach dem Erkennen eines umschaltrelevanten Druckbereichs bestimmt das Füllungskorrekturmodell anhand von Berechnungen oder mittels eines Füllungskorrekturkennfelds für die möglichen Ventilhübe der Brennkraftmaschine Korrekturwerte Δ MAF-CORR 1 und ΔMAF_CORR 2 für die Zylinderfüllung. Sollte sich die Brennkraftmaschine nicht in einem umschaltrelevanten Druckbereich befinden, wird entsprechend das Füllungskorrekturmodell nicht aktiviert. Erfolgt nach der Bestimmung der oben genannten Korrekturwerte eine Umschaltanforderung für den Ventilhub durch die Motorsteuerung, werden die Korrekturwerte Δ MAF_CORR 1, 2 den Luftmengen-Werten MAF1, MAF2 aus dem Basis-Saugrohrmodell überlagert. Diese Überlagerung erfolgt in einem Addierer, in dem die Korrektur-Luftmenge ΔMAF_CORR 1, Δ MAF_CORR 2, die positives und negatives Vorzeichen haben können, zur Basis-Luftmenge MAF1, MAF2 addiert werden. Nachfolgend werden sowohl die Basis-Luftmenge MAF entsprechend dem gerade anliegenden Ventilhub und die korrigierte Basis-Luftmenge MAF_CORR an einen Momentenkorrektur-Block der Brennkraftmaschine weitergeleitet.

Die oben genannten Korrekturkennfeldsätze des Füllungskorrekturmodells, die beispielsweise durch das Diagrammsymbol beim Füllungskorrekturmodell in Fig. 1 dargestellt sind, sind aus Speicherkapazitätsgründen derart ausgeführt, dass lediglich ein schmaler Saugrohr-Druckbereich abgebildet wird. Dieser Druckbereich entspricht dem umschaltrelevanten Druckbereich, so dass die Korrektur des Füllungskorrekturkennfelds gerade in diesem Druckbereich wirkt. Der Druckbereich wird dabei so gewählt, dass der Druckwert, bei dem typischerweise die Ventilhubumschaltung erfolgt, etwa mittig abgedeckt ist. Die Füllungskorrekturkennfelder sind darüber hinaus exakt bedatet und decken vorteilhafter Weise alle zylinderfüllungsrelevanten Einflussgrößen, wie Motordrehzahl, Ansauglufttemperatur, Nockenwellenstellung, Drallklappenstellung, etc. ab. Dies wird dadurch erreicht, dass die entsprechenden Kennfeldpunkte bei der Fahrzeug- bzw. Motorapplikation explizit angefahren und bedatet werden.

Im weiteren Verfahren wird aus der Korrektur-Zylinderfüllung MAF_CORR, vorzugsweise der korrigierten Luftmenge, im Vergleich zur Basis-Zylinderfüllung Basis-MAF, vorzugsweise der Basis-Luftmenge, eine entsprechende Momentenkorrektur für die Brennkraftmaschine mit Hilfe einer Differenz ermittelt. Daraus folgt, dass die aus den Füllungskorrekturkennfeldern abgeleitete Korrektur-Zylinderfüllung auf die anhand des Basis-Saugrohrmodells berechneten Betriebsdaten der Brennkraftmaschine angewandt wird. In dem bereits oben genannten Block "Momentenkorrektur" der Brennkraftmaschine werden daher spezifische Korrekturgrößen für die Betriebsdaten der Brennkraftmaschine berechnet, wie beispielsweise eine Korrektur der Einspritzzeit ΔTI, eine Korrektur des Zündwinkels, ΔIGA, eine Korrektur der Drosselklappenstellung ΔTPS und dergleichen. Die Weiterverrechnung der Korrekturwerte erfordert daher einen gewissen Rechenaufwand, weil diese zum Konstanthalten des Drehmoments der Brennkraftmaschine in allen Betriebsgrößen berücksichtigt werden muss.

Gemäß einer weiteren Ausgestaltung des Verfahrens wird bei Annäherung an den umschaltrelevanten Druckbereich die Füllungskorrektur gewichtet berücksichtigt. D.h. je mehr man sich dem Saugrohr-Umschaltdruck für den Ventilhub nähert, desto stärker greift die durch das Füllungskorrekturmodell berechnete Korrektur. Dies ermöglicht einen besonders weichen Übergang zwischen den Ventilhüben. Des Weiteren ist es vorteilhaft, wenn der fein abgestimmte Basis-Saugrohrmodellbereich bei gleicher Datenmenge größer als der umschaltrelevante Druckbereich ausgeführt wird, da dann in jedem Fall sichergestellt ist, dass für den Umschaltprozess die genaueren Zylinderfüllungswerte verwendet werden.

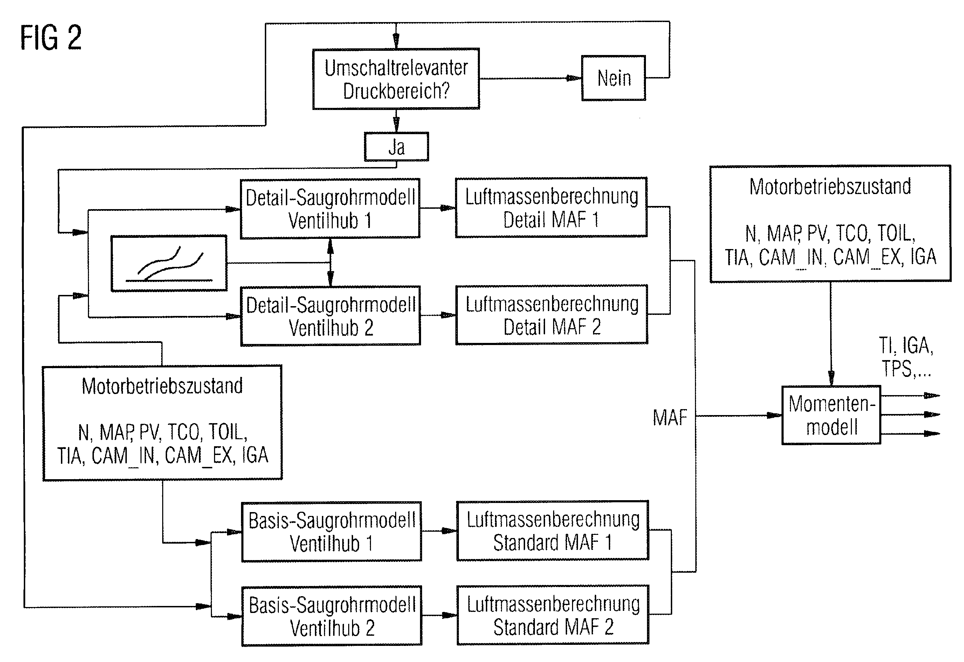

Gemäß einer weiteren in Fig. 2 dargestellten Ausführungsform umfasst die Motorsteuerung das bereits oben diskutierte Basis-Saugrohrmodell und ein Detail-Saugrohrmodell für die jeweils möglichen Ventilhübe der Brennkraftmaschine. Sofern kein umschaltrelevanter Druckbereich durch die Motorsteuerung erkannt wird, wird die Zylinderfüllung und somit die Basis-Luftmenge durch das Basis-Saugrohrmodell in gleicher Weise wie oben beschrieben vorgegeben. Erkennt die Motorsteuerung anhand des Betriebszustands der Brennkraftmaschine einen umschaltrelevanten Druckbereich, wird gemäß dem in Fig. 2 dargestellten Verfahren das Detail-Saugrohrmodell aktiviert, während die Daten des Basis-Saugrohrmodells nicht länger an das Momentenmodell weitergeleitet werden. Die für die Steuerung der Brennkraftmaschine nun vorzugebende Luftmenge wird allein durch das Detail-Saugrohrmodell vorgegeben.

Während die bereits oben genannten Betriebszustandsdaten der Brennkraftmaschine sowohl in das Detail-Saugrohrmodell wie auch in das Basis-Saugrohrmodell einfließen, erfolgt im umschaltrelevanten Druckbereich keine Korrektur des Basis-Saugrohrmodells. Stattdessen wird eine eigenständige Bestimmung der Zylinderfüllung, vorzugsweise der Luftmenge DETAIL MAF1 und DETAIL MAF2, in diesem Bereich durchgeführt. Diese Bestimmung kann entweder durch Berechnung oder gestützt auf Kennfelder erfolgen. Die bestimmte Zylinderfüllung, insbesondere der berechnete MAF-Wert, geht dann in das Drehmomentenmodell der Brennkraftmaschine ein. Dies hat den Vorteil, dass die ursprüngliche Struktur des Verfahrens bzw. der Steuerung der Brennkraftmaschine nur an einer Stelle aufgebrochen werden muss, während sie ansonsten beibehalten werden kann.

Ähnlich wie das Füllungskorrekturmodell ist das Detail-Saugrohrmodell nur auf den umschaltrelevanten Druckbereich abgebildet. Daraus folgt aufgrund einer ähnlich großen gespeicherten Datenmenge die Möglichkeit einer höheren Genauigkeit im Vergleich zum Basis-Saugrohrmodell, das auf einen weitaus größeren Druckbereich abgebildet ist.

Da das Momentenmodell gemäß Fig. 2 nicht auf den Luftmengen-Werten des Basis-Saugrohrmodells aufbaut, sind die rechenintensiven Korrekturwertberechnungen gemäß Fig. 1 nicht erforderlich. Die berechnete Luftmenge des Detail-Saugrohrmodells geht direkt in das Momentenmodell ein, so dass nachfolgend die Einspritzzeit TI, der Zündwinkel IGA und die Drosselklappenstellung TPS ausgegeben werden kann.

Von Vorteil ist es darüber hinaus, wenn der Wechsel vom Basis-Saugrohrmodell zum Detail-Saugrohrmodell hysteresebehaftet gestaltet wird. Auf diese Weise wird ein ständiges Umschalten bei geringen Betriebspunktvariationen verhindert, das ebenfalls als Jitter bekannt ist.

Der Hauptvorteil des oben in den verschiedenen Ausführungsformen dargestellten Verfahrens besteht somit darin, dass im umschaltrelevanten Druckbereich die in den Zylinder strömende Luftmasse deutlich exakter berechnet wird. Dadurch gewinnt die Drehmomentenprädiktion an Genauigkeit und der Umschaltvorgang der Ventile wird verbessert und läuft ruckfrei ab. Die Tatsache, dass die Kennfelder bezüglich des Druckbereichs schmal ausgeführt werden, spart Speicherplatz und schont die Ressourcen der Motorsteuerung bzw. des Betriebssteuergeräts. Des Weiteren erfolgen die Berechnung der Korrekturwerte nur im umschaltrelevanten Druckbereich und die Weiterverrechnung nur bei gegebener Umschaltanforderung. Somit bleibt der zusätzliche Rechenaufwand gering. Ebenso hält sich der applikative Aufwand in Grenzen. Ein weiterer Vorteil des Verfahrens besteht darin, dass es einfach in bestehende Motorsteuerungen integriert werden kann, unabhängig von der jeweils verwendeten Funktionsstruktur.

## Patentansprüche

1. Verfahren zur Steuerung einer Brennkraftmaschine mit Ventilhubumschaltung, das die folgenden Schritte aufweist:
a. Bestimmen einer Basis-Zylinderfüllung, insbesondere einer Basis-Luftmenge (MAF 1, MAF 2), mit Hilfe eines Basis-Saugrohrmodells für mindestens einen ersten und einen zweiten Ventilhub der Brennkraftmaschine ausgehend von einem erfassten Saugrohrdruck (MAP),
b. Erkennen eines umschaltrelevanten Druckbereichs für die Ventilhubumschaltung anhand des erfassten Saugrohrdrucks (MAP) und
c. Bestimmen einer Umschalt-Zylinderfüllung entsprechend eines Betriebspunkts der Brennkraftmaschine für den umschaltrelevanten Druckbereich mit Hilfe eines Umschalt-Saugrohrmodells, so dass die auf Grundlage der Umschalt-Zylinderfüllung angesteuerte Ventilhubumschaltung mit annähernd konstantem Drehmoment der Brennkraftmaschine durchführbar ist.

2. Verfahren gemäß Anspruch 1, in dem sich das Umschalt-Saugrohrmodell aus dem Basis-Saugrohrmodell für jeden Ventilhub und einem Füllungskorrekturmodell für jeden Ventilhub zusammensetzt.

3. Verfahren gemäß Anspruch 1 oder 2, in dem das Basis-Saugrohrmodell die Basis-Zylinderfüllung für jeden Ventilhub jeweils basierend auf einem eigenen Basis-Kennfeld bestimmt.

4. Verfahren gemäß Anspruch 2 oder 3, in dem das Füllungskorrekturmodell einen Korrekturwert (ΔMAF_CORR 1, ΔMAF_CORR 2), insbesondere eine Korrektur-Luftmenge, für die Basis-Zylinderfüllung (MAF 1, MAF 2) für jeden Ventilhub bestimmt, der zur Basis-Zylinderfüllung (MAF 1, MAF 2) addiert eine Korrektur-Zylinderfüllung (MAF_KORR) ergibt.

5. Verfahren gemäß Anspruch 2 oder 4, in dem das Korrekturmodell jeweils ein Füllungskorrekturkennfeld je Ventilhub aufweist.

6. Verfahren gemäß Anspruch 5, mit dem weiteren Schritt:
Abdecken nur des umschaltrelevanten Druckbereichs mit dem Füllungskorrekturkennfeld.

7. Verfahren gemäß einem der Ansprüche 4 bis 6, mit dem weiteren Schritt:
Korrigieren von Betriebsdaten des Motors zu dessen Momentenkorrektur unter Berücksichtigung der Korrektur-Zylinderfüllung (MAF_KORR) und auf dieser Grundlage bestimmter spezifischer Korrekturgrößen, vorzugsweise einer Einspritzzeit-Korrektur (ΔTI), einer Zündwinkel-Korrektur (ΔIGA) und einer Korrektur einer Drosselklappenstellung.

8. Verfahren gemäß Anspruch 7, mit dem weiteren Schritt:
gewichtetes Bestimmen der Korrektur-Zylinderfüllung, indem mit zunehmender Entfernung von einem Umschaltdruck der Korrekturwert (ΔMAF_CORR 1, ΔMAF_CORR 2) mit abnehmendem Anteil in die Korrektur-Zylinderfüllung eingeht.

9. Verfahren gemäß Anspruch 1, in dem das Umschalt-Saugrohrmodell allein durch ein Detail-Saugrohrmodell für jeden Ventilhub begrenzt auf den umschaltrelevanten Druckbereich gebildet wird.

10. Verfahren gemäß Anspruch 9, in dem das Detail-Saugrohrmodell die Umschalt-Zylinderfüllung für den jeweiligen Ventilhub spezifisch berechnet oder basierend auf einem für jeden Ventilhub spezifischen Füllungskennfeld bestimmt.

11. Verfahren gemäß Anspruch 9, in dem das Detail-Saugrohrmodell mit größerer Genauigkeit als das Basis-Saugrohrmodell in Bezug auf die Bestimmung der Zylinderfüllung ausgeführt ist, um Rechenleistung und/oder Speicherkapazität zu sparen.

## Claims

1. Method for controlling an internal combustion engine using valve lift switchover, comprising the following steps:
a. determine a basic cylinder charge, in particular a basic air quantity (MAF 1, MAF 2), with the aid of a basic intake manifold model for at least one first and one second valve lift of the internal combustion engine starting from a recorded intake manifold pressure (MAP),
b. detect a switchover-relevant pressure range for the valve lift switchover on the basis of the recorded intake manifold pressure (MAP), and
c. determine a switchover cylinder charge corresponding to an operating point of the internal combustion engine for the switchover-relevant pressure range with the aid of a switchover intake manifold model, so that the valve lift switchover activated on the basis of the switchover cylinder charge can be executed with approximately constant torque of the internal combustion engine.

2. Method according to claim 1, wherein the switchover intake manifold model is composed of the basic intake manifold model for each valve lift and a charge correction model for each valve lift.

3. Method according to claim 1 or 2, wherein the basic intake manifold model determines the basic cylinder charge for each valve lift based in each case on a separate basic characteristic map.

4. Method according to claim 2 or 3, wherein the charge correction model determines a correction value (ΔMAF_CORR 1, ΔMAF_CORR 2), in particular a correction air quantity, for the basic cylinder charge (MAF 1, MAF 2) for each valve lift, which correction value, when added to the basic cylinder charge (MAF 1, MAF 2), yields a correction cylinder charge (MAF_KORR).

5. Method according to claim 2 or 4, wherein the correction model has in each case a charge correction characteristic map per valve lift.

6. Method according to claim 5, comprising the further step:
cover only the switchover-relevant pressure range with the charge correction characteristic map.

7. Method according to one of claims 4 to 6, comprising the further step:
correct operating data of the engine for the purpose of torque correction of the latter, taking into account the correction cylinder charge (MAF_KORR) and specific correction variables determined on this basis, preferably an injection time correction (ΔTI), an ignition angle correction (ΔIGA) and a correction of a throttle valve position.

8. Method according to claim 7, comprising the further step:
determine the correction cylinder charge in a weighted manner, where the correction value (ΔMAF_CORR 1, ΔMAF_CORR 2) is incorporated into the correction cylinder charge in decreasing proportion as the distance from a switchover pressure increases.

9. Method according to claim 1, wherein the switchover intake manifold model is formed solely by a detailed intake manifold model for each valve lift limited to the switchover-relevant pressure range.

10. Method according to claim 9, wherein the detailed intake manifold model calculates the switchover cylinder charge for the respective valve lift specifically or determines it based on a charge characteristic map specific to each valve lift.

11. Method according to claim 9, wherein the detailed intake manifold model is implemented with greater precision than the basic intake manifold model in respect of the determination of the cylinder charge in order to save computing power and/or memory storage capacity.

## Revendications

1. Procédé de commande d'un moteur à combustion interne avec un système de commutation de la levée de soupape, qui comporte les étapes suivantes :
a) détermination d'un remplissage de base des cylindres, en particulier une quantité d'air de base (MAF 1, MAF 2), au moyen d'un modèle de collecteur d'admission de base pour au moins une première et une deuxième levée de soupape du moteur à combustion interne à partir d'une pression du collecteur d'admission (MAP) enregistrée ;
b) détection d'une plage de pression significative pour la commutation de la levée de soupape, en fonction de la pression du collecteur d'admission (MAP) enregistrée ; et
c) détermination d'un remplissage des cylindres en commutation conformément à un point de fonctionnement dynamique du moteur à combustion interne pour la plage de pression significative pour la commutation au moyen d'un modèle de collecteur d'admission en commutation, de telle sorte que la commutation de la levée de soupape, activée sur la base du remplissage des cylindres en commutation, peut être effectuée avec un couple de rotation à peu près constant du moteur.

2. Procédé selon la revendication 1, dans lequel le modèle de collecteur d'admission en commutation est formé par le modèle de collecteur d'admission de base pour chaque levée de soupape et un modèle de correction de remplissage pour chaque levée de soupape.

3. Procédé selon la revendication 1 ou 2, dans lequel le modèle de collecteur d'admission de base détermine le remplissage de base des cylindres pour chaque levée de soupape respectivement sur la base de son propre champ caractéristique de base.

4. Procédé selon la revendication 2 ou 3, dans lequel une valeur de correction (ΔMAF_CORR 1, ΔMAF_CORR 2), en particulier une quantité d'air corrigée, est déterminée dans le modèle de correction de remplissage pour le remplissage de base des cylindres (MAF 1, MAF 2) pour chaque levée de soupape, laquelle valeur de correction additionnée au remplissage de base des cylindres (MAF 1, MAF 2) donne un remplissage corrigé des cylindres (MAF_KORR).

5. Procédé selon la revendication 2 ou 4, dans lequel le modèle de correction comporte respectivement un champ caractéristique de correction du remplissage par levée de soupape.

6. Procédé selon la revendication 5, comportant l'étape supplémentaire :
couverture uniquement de la plage de pression significative pour la commutation avec le champ caractéristique de correction du remplissage.

7. Procédé selon l'une quelconque des revendications 4 à 6, comportant l'étape supplémentaire :
correction des données d'exploitation du moteur en vue de la correction des moments de celui-ci en tenant compte du remplissage corrigé des cylindres (MAF KORR) et de grandeurs de correction spécifiques, déterminées sur cette base, de préférence une correction du temps d'injection (ΔTI), une correction de l'angle d'allumage (ΔIGA), une correction de la position du papillon des gaz.

8. Procédé selon la revendication 7, comportant l'étape supplémentaire :
une détermination pondérée du remplissage corrigé des cylindres est effectuée, du fait qu'en présence d'un écart de plus en plus grand par rapport à la pression de commutation, la valeur de correction (ΔMAF_CORR 1, ΔMAF_CORR 2) entre de moins en moins dans le remplissage corrigé des cylindres.

9. Procédé selon la revendication 1, dans lequel le modèle de collecteur d'admission en commutation est formé uniquement par un modèle de collecteur d'admission de détail pour chaque levée de soupape, limité à la plage de pression significative pour la commutation.

10. Procédé selon la revendication 9, dans lequel le modèle de collecteur d'admission de détail calcule le remplissage des cylindres en commutation pour la levée de soupape respective spécifiquement, ou celle-ci est déterminée sur la base d'un champ caractéristique de remplissage spécifique pour chaque levée de soupape.

11. Procédé selon la revendication 9, dans lequel le modèle de collecteur d'admission de détail est réalisé avec une plus grande précision que le modèle de collecteur d'admission de base sur le plan de la détermination du remplissage des cylindres, afin d'économiser dans l'ensemble la puissance de calcul et/ou la capacité de mémoire.
